# DEMANDE DE BREVET EUROPEEN

(11) **EP 3 838 723 A1**
(43) Date de publication de la demande: **23.06.2021**
(21) Numéro de dépôt: 20212703.1
(22) Date de dépôt: 09.12.2020
(51) Int. Cl.: B62D 35/00, B62D 37/02

(54) **BECQUET POUR VÉHICULE AUTOMOBILE MUNI D'UN ÉLÉMENT AÉRODYNAMIQUE**

(30) Priorité: 20.12.2019 FR 1915221
(71) Demandeur: Compagnie Plastic Omnium SE, 69007 Lyon (FR)
(72) Inventeur: KARRAMKAN, Martin, 01150 SAINTE-JULIE (FR); GUY, Kévin, 01150 SAINTE-JULIE (FR); MASSON, Sébastien, 01150 SAINTE-JULIE (FR); JUILLARD, Pierre, 01150 SAINTE-JULIE (FR)
(74) Mandataire: LLR

(57) **Abrégé**

L'invention concerne un becquet (1) arrière pour véhicule automobile comprenant :
- un corps principal (10) muni d'une ouverture (11),
- un élément mobile (20) sur le corps principal (10) entre une position rétractée à l'intérieur du corps principal (10) et une position déployée dans laquelle l'élément mobile (20) se trouve au moins partiellement hors du corps principal (10) et à travers l'ouverture (11),
- des éléments latéraux (30) configurés pour masquer un jeu au niveau de l'ouverture (11) entre l'élément mobile (20) et le corps principal (10) en position rétractée.

## Description

L'invention concerne le domaine de l'industrie automobile, et en particulier un becquet arrière permettant de moduler l'aérodynamisme du véhicule

On connaît des véhicules automobiles équipés de becquet. On appelle becquet (ou spoiler en anglais) une pièce de carrosserie formant une extension du toit positionné sur l'arrière d'un véhicule, et destinée à améliorer l'aérodynamique du véhicule sur lequel cette pièce est placée. Les becquets sont également utilisés pour des aspects esthétiques du véhicule. Ils sont situés et fixés en partie haute et arrière du véhicule entre le toit et le bord supérieur de la lunette, sur le toit ou sur le hayon. Certains becquets constituent également des dispositifs de nettoyage de la lunette arrière, en redirigeant l'air passant au-dessus du véhicule vers la vitre arrière de façon à en chasser l'eau de pluie.

Un inconvénient de ces becquets est qu'il n'est pas possible d'améliorer l'aérodynamisme du véhicule en fonction de la vitesse. Ainsi, les becquets arrière ont une efficacité globale moyenne pour chaque régime de vitesse. Ils ne permettent pas d'obtenir la meilleure efficience pour chaque régime de vitesse.

On connaît un type de becquet qui comprend un élément aérodynamique mobile permettant d'occuper différentes positions par rapport au becquet en fonction du régime de vitesse du véhicule. Le becquet comprend une zone de réception de l'élément aérodynamique lorsque celui-ci est en position rétractée. Ainsi, l'élément aérodynamique est complètement dissimilé par le becquet en cette position et n'est plus visible depuis l'extérieur du véhicule.

Cependant, sur ce type de becquet, des jeux peuvent être générés entre l'élément aérodynamique et le becquet lorsque l'élément aérodynamique est en position rétractée. En effet, afin de répondre aux exigences techniques ou esthétiques, l'élément aérodynamique doit avoir une forme particulière, par exemple, une forme qui suit les lignes de style de la peau du becquet. Ainsi, l'élément aérodynamique peut avoir une forme non rectangulaire et présente un bord qui a une largeur moindre que celle de l'extrémité du becquet. Les jeux qui sont formés entre ledit bord de l'élément aérodynamique et l'extrémité du becquet ne sont pas toujours acceptables en termes de qualité perçue.

L'invention a notamment pour but de remédier à ces inconvénients en proposant un becquet muni d'un élément aérodynamique ayant une meilleure finition tout en respectant les exigences techniques et esthétiques de l'élément aérodynamique.

A cet effet l'invention a pour objet un becquet arrière pour véhicule automobile comprenant :
- un corps principal muni d'une ouverture,
- un élément mobile sur le corps principal entre une position rétractée à l'intérieur du corps principal et une position déployée dans laquelle l'élément mobile se trouve au moins partiellement hors du corps principal et à travers l'ouverture,
- des éléments latéraux configurés pour masquer un jeu au niveau de l'ouverture entre l'élément mobile et le corps principal en position rétractée.

Un becquet équipé d'un élément mobile rétractable permet d'améliorer l'aérodynamisme du véhicule car il est possible de choisir la position de l'élément aérodynamique en fonction du régime de vitesse. Par ailleurs, la présente invention permet d'avoir toujours une forme adaptée en position déployée, ce qui permet d'obtenir une meilleure efficience aérodynamique et une meilleure finition du becquet car elle permet de mieux suivre les lignes de style de la peau du becquet lorsque l'élément mobile est en position déployée.

L'invention permet encore une amélioration de l'efficience aérodynamique et la finition du becquet en position rétractée. En effet, l'invention permet de supprimer tout type de jeu qu'il peut y avoir entre l'élément mobile et le corps principal du becquet en fonction de la géométrie de l'élément mobile.

Suivant d'autres caractéristiques optionnelles du becquet prises seules ou en combinaison :
- Le corps principal comprend un logement de l'élément mobile en position rétractée, le logement étant configuré pour permettre une liaison glissière entre l'élément mobile et le corps principal. l'élément mobile est mieux guidé dans son déplacement et est protégé de l'environnement extérieur en position rétractée.
- L'élément mobile présente une forme sensiblement trapézoïdale et les éléments latéraux sont agencés de part et d'autre de l'élément mobile en position rétractée. la forme trapézoïdale permet un meilleur aérodynamisme du véhicule et offre une meilleure finition du becquet car elle permet de mieux suivre les lignes de style de la peau du becquet lorsque l'élément mobile est en position déployée. Ainsi, deux jeux sont générés de part et d'autre de l'élément mobile en position rétractée et chaque élément latéraux permet de contribuer au masquage d'un jeu.
- les éléments latéraux sont montés mobiles par rapport à l'élément mobile et configurés pour être actionnés par l'élément mobile. Ainsi le mouvement des éléments latéraux est automatique et simultané avec le mouvement de l'élément mobile. Aucun autre moyen d'actionnement dédié aux élément latéraux n'est nécessaire.
- Les élément latéraux sont configurés à se rétracter dans le logement lorsque l'élément mobile est en position déployée. Ainsi, le déplacement des éléments latéraux est réalisé à l'intérieur du becquet ce qui permet un gain de place.
- Les éléments latéraux sont configurés à se déplacer dans des zones adjacentes à l'ouverture sur le corps principal lorsque l'élément mobile est en position déployée. Les éléments latéraux étant montés sur le corps principal du becquet sont plus robustes face au changement de position fréquent de l'élément mobile.
- Le corps principal comprend des moyens de guidage des éléments latéraux entre deux positions distinctes lorsque l'élément mobile se déplace entre la position rétractée et la position déployée. L'une des positions correspondant à celle à laquelle les éléments latéraux masquent un jeu au niveau de l'ouverture entre l'élément mobile et le corps principal en position rétractée.
- Les éléments latéraux sont montés de façon fixe sur l'élément mobile. Les éléments latéraux peuvent être rapportés à l'élément aérodynamique par surmoulage, collage ou tout autre moyen mécanique. Ceci présente une solution simple et économique.

L'invention a également pour objet un véhicule comprenant un becquet arrière précédemment décrit.

Avantageusement, le véhicule comprend un moyen d'actionnement actif de l'élément aérodynamique permettant de mouvoir l'élément aérodynamique entre la position rétractée et la position déployée.

### Brève description des figures

L'invention sera mieux comprise à la lecture de la description qui va suivre donnée uniquement à titre d'exemple et faite en se référant aux dessins annexés dans lesquels :
[Fig. 1] la figure 1 est un ensemble de vues (figures 1a, 1b et 1c) illustrant un becquet muni d'un élément mobile en différentes positions selon l'état de la technique ;
[Fig. 2] la figure 2 est un ensemble de vue (figure 2a et 2b) en perspective d'un élément mobile muni de deux éléments latéraux selon un premier mode de réalisation de l'invention;
[Fig. 3] la figure 3 est un ensemble de vues (figures 3a et 3b) schématiques de l'élément mobile de la figure 2 en position rétractée et en position déployée ;
[Fig. 4] la figure 4 est un autre ensemble de vues (figures 4a et 4b) schématiques de l'élément mobile de la figure 2 en position rétractée et en position déployée ;
[Fig. 5] la figure 5 est un ensemble de vues (figures 5a et 5b) schématiques de l'élément mobile selon un deuxième mode de réalisation, en position rétractée et en position déployée ;
[Fig.6] la figure 6 est une vue de dessus d'un becquet muni d'un élément mobile selon un troisième mode de réalisation de l'invention.

### Description détaillée

On a représenté sur la figure un becquet 1 arrière équipé d'un élément mobile 20, le becquet 1 étant destiné à être positionné à l'arrière d'un véhicule et à former une extension permettant d'améliorer les performances aérodynamiques du véhicule. Le becquet 1 est fixé soit sur le toit, soit sur le hayon, soit sur le coffre, horizontalement ou verticalement, en saillie vers l'arrière du véhicule.

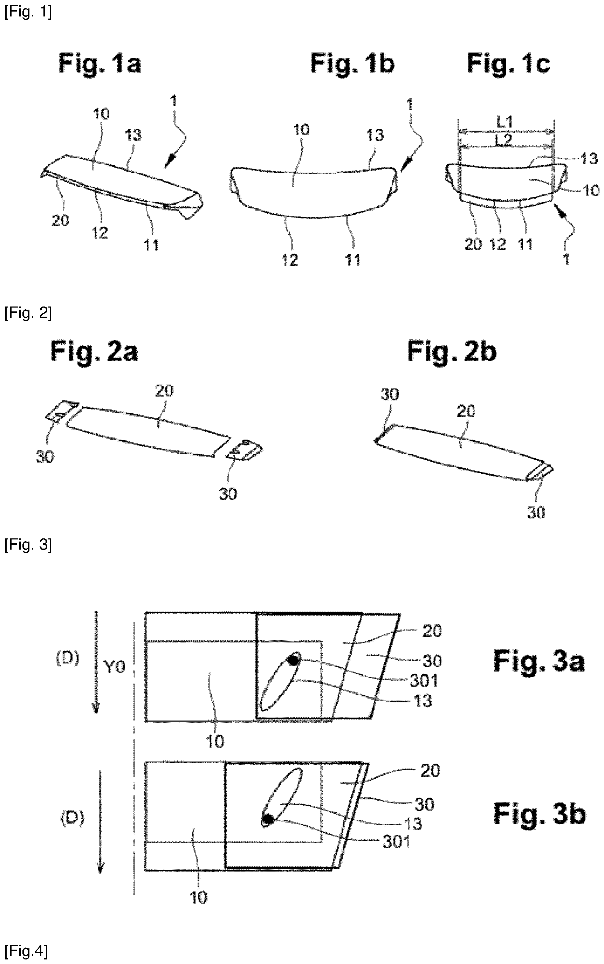

Tel que visible aux figures 1a, 1b et 1c, le becquet 1 comprend un corps principal 10 muni d'une base 13 destinée à relier le corps principal 10 au véhicule et d'une ouverture 11. Comme visible sur les figures 1a et 1b, la base 13 présente une largeur plus grande que celle de l'ouverture 11 ce qui fait que le corps principal 10 du becquet 1 a une forme sensiblement trapézoïdale avec les deux bases légèrement courbées. Tel qu'illustré aux figures 1a, 1b et 1c, ladite ouverture 11 donne accès à un logement 12 dans le corps principal 10.

Le becquet 1 comprend en outre un élément mobile 20 qui est monté mobile dans le logement 12 du corps principal 10 entre une position rétractée dans laquelle l'élément mobile 20 est totalement dissimulé dans le logement 12 (voir figures 1a et 1b) et une position déployée dans laquelle l'élément mobile 20 se trouve au moins partiellement hors du logement 12 à travers l'ouverture 11 (voir figure 1c). L'élément mobile 20 se déplace entre les deux positions en un mouvement de translation dans le logement 12. Pour ce faire, le logement 12 peut comprendre des rails ou des rainures destinés à coopérer avec les deux côtés de l'élément mobile 20 pour le guider en translation.

L'élément mobile 20 présente une première largeur L1 en position déployée, comme visible à la figure 1c. La première largeur L1 correspond sensiblement à la largeur de l'ouverture 11 ce qui fait qu'aucun jeu n'est visible entre l'élément mobile 20 et le corps principale 10 lorsque l'élément mobile 20 est en position déployée. L'élément mobile 20 présente une seconde largeur L2 sur l'extrémité libre en position déployée, la première largeur L1 étant plus importante que la seconde largeur L2 ce qui fait que l'élément mobile 20 présente une forme sensiblement trapézoïdale en position déployée. Par conséquent, lorsque l'élément mobile 20 est en position rétractée, des jeux sont générés au niveau de l'ouverture 11 entre l'extrémité libre de l'élément mobile 20 et le corps principal 10.

Afin de remédier à ce problème, le becquet 1 selon l'invention comprend des élément latéraux 30, 32, 33 configurés pour masquer ces jeux lorsque l'élément mobile est en position rétractée.

Les figures 2, 3 et 4 illustrent un premier mode de réalisation des éléments latéraux, dans lequel le becquet 1 comprend deux éléments latéraux 30, sous forme de lames 30, montés coulissant de part et d'autre de l'élément mobile 20.

Dans l'exemple illustré et notamment comme visible à la figure 3, l'élément mobile 20 comprend une portion qui se trouve hors du corps principal lorsque l'élément mobile 20 est en position déployée, ladite portion présentant une forme sensiblement trapézoïdale. L'élément mobile 20 comprend un axe de symétrie YO et uniquement la moitié de ladite portion de l'élément mobile 20 est illustrée dans cette figure. Pour passer de la position rétractée à la position déployée, l'élément mobile 20 est configuré pour se déployer dans une direction (D) pour s'éloigner du corps principal 10 du becquet 1, tel qu'illustré à la figure 3.

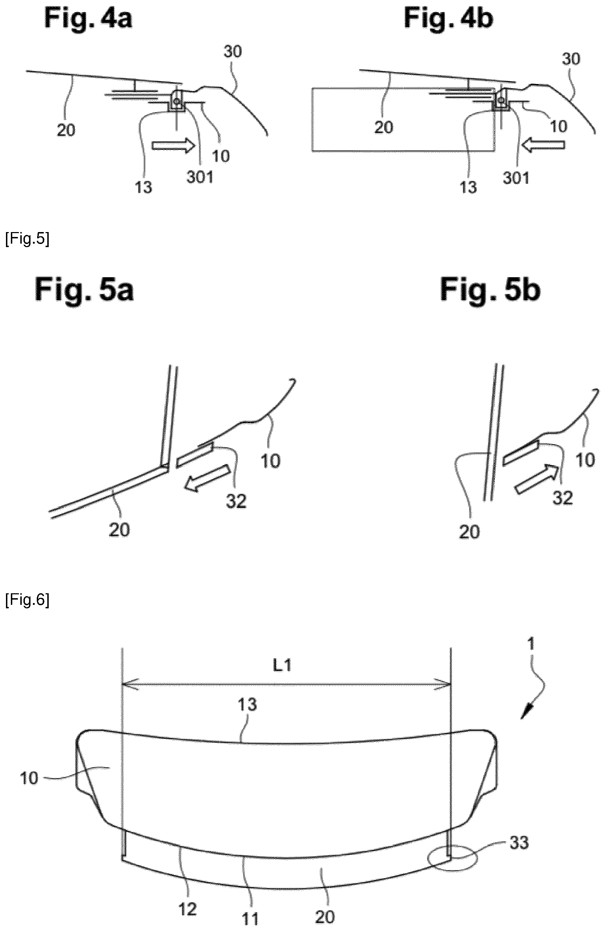

Les éléments latéraux 30 sont montés mobiles par rapport à l'élément mobile 20 et configurés pour être actionnés par l'élément mobile 20. Pour ce faire, les éléments latéraux 30 sont montés coulissants sur l'élément mobile 20 par une première liaison glissière, telle que visible à la figure 4. Par ailleurs, chaque élément latéral 30 comprend un doigt 301 destiné à coopérer avec une rainure ou un chemin de came 13 porté par le corps principal 10 pour former une seconde liaison glissière comme visible à la figure 4. Le chemin de came 13 est configuré pour guider le doigt 301 dans un déplacement en translation selon une direction formant avec l'axe YO un angle non nul. Ainsi, lorsque l'élément mobile 20 passe de la position rétractée (figure 3a) à la position déployée (figure 3b), les éléments latéraux 30 se déplacent sur l'élément mobile 20 pour s'approcher de l'axe de symétrie YO.

Chaque élément latéral 30 comprend également une portion destinée à être hors du corps principal 10 lorsque l'élément mobile 20 est en position déployée, ladite portion présentant une forme trapézoïdale. Ainsi, lorsque l'élément mobile 20 est en position déployée (figure 3b), cette portion de l'élément latéral 30 est hors du corps principal 10 mais sensiblement dissimulée par l'élément mobile 20 ; lorsque l'élément mobile 20 est en position rétractée (figure 3a), cette portion de l'élément latéral 30 est rétractée dans le logement12 mais s'étend à l'extérieur de l'élément mobile 20 ce qui permet de compléter l'espace vide formé par l'extrémité de l'élément mobile 20 et l'ouverture 11 du corps principale 10.

Un deuxième mode de réalisation de l'invention est illustré à la figure 5. Ce deuxième mode de réalisation diffère du premier mode de réalisation en ce que les élément latéraux 32 sont configurés à se déplacer dans des zones adjacentes à l'ouverture 11 sur le corps principal 10. Comme représenté schématiquement aux figures 5a et 5b, chaque élément latéral 32 comprend un corps longitudinal ayant une épaisseur sensiblement identique à celle de l'extrémité libre de l'élément mobile 20. L'élément latéral 32 est agencé sur le corps principal 10 du becquet 1 à l'extérieur du logement 12. Les éléments latéraux 32 sont actionnés par le déploiement de l'élément mobile 20, par exemple via un mécanisme d'actionnement 14 agencé dans le logement 12 ou une zone non visible sur le corps principal 10. Le mécanisme d'actionnement 14 peut être configuré de façon à ce que l'élément latéral 32 soit poussé vers l'extérieur du becquet 1 lorsque l'élément mobile 20 se déplace vers la position déployée (figure.5b). Tel que visible à la figure 5b, dans cette position, l'élément latéral 32 ne recouvre pas l'ouverture 11 ce qui permet le passage de l'élément mobile 20 dans l'ouverture 11. Le mécanisme d'actionnement 14 peut comprendre un moyen de rappel, par exemple un ressort, permettant de ramener l'élément latéral 32 à sa position initiale (figure.5a) à laquelle l'élément latéral 32 vient fermer partiellement l'ouverture 11 pour combler le jeu entre l'élément mobile 20 et le corps principal 10.

La figure 6 illustre un troisième mode de réalisation de l'invention selon lequel les éléments latéraux 33 sont montés de façon fixe sur l'élément mobile 20. Tel que visible à cette figure, l'élément mobile 20 comprend sur son extrémité libre deux ergots 33 agencés de part et d'autre de l'extrémité libre formant chacun une partie saillante. Dans ce mode de réalisation, les éléments latéraux 33 forment avec l'élément mobile 20 une pièce d'un seul tenant, par exemple suite à un surmoulage. L'élément mobile 20 selon ce mode de réalisation présente ainsi une extrémité libre plus large ayant une largeur sensiblement identique à celle de l'ouverture 11 ce qui permet de supprimer les jeux formés par l'élément mobile 20 et le corps principal 10 en position rétractée.

L'invention n'est pas limitée aux modes de réalisation présentés et d'autres modes de réalisation apparaîtront clairement à l'homme du métier. Il est notamment possible d'envisager d'autres moyens d'actionnement et moyens de guidage dans les premier et deuxième modes de réalisation, qui apparaîtront évidents pour l'homme du métier.

### Liste de références

- 1: : becquet
- 10: : corps principal
- 11: : ouverture
- 12: : logement
- 13, 14: : moyens de guidage
- 20: : élément mobile
- 30, 32, 33: : élément mobile
- 301: : doigt
- L1: : première largeur
- L2: : seconde largeur
- YO: : axe de symétrie
- (D): : direction de déploiement

## Revendications

1. Becquet (1) arrière pour véhicule automobile comprenant :
- un corps principal (10) muni d'une ouverture (11) ;
- un élément mobile (20) sur le corps principal (10) entre une position rétractée à l'intérieur du corps principal (10) et une position déployée dans laquelle l'élément mobile (20) se trouve au moins partiellement hors du corps principal (10) et à travers l'ouverture (11) ;
- des éléments latéraux (30, 32, 33) configurés pour masquer un jeu au niveau de l'ouverture (11) entre l'élément mobile (20) et le corps principal (10) en position rétractée,
dans lequel les éléments latéraux (30, 32) sont montés mobiles par rapport à l'élément mobile (20), et configurés pour être actionnés par l'élément mobile (20).

2. Becquet (1) selon la revendication précédente, dans lequel le corps principal (10) comprend un logement (12) pour l'élément mobile (20) en position rétractée, le logement étant configuré pour permettre une liaison glissière entre l'élément mobile (20) et le corps principal (10).

3. Becquet selon l'une quelconque des revendications 1 ou 2, dans lequel l'élément mobile (20) présente une forme sensiblement trapézoïdale et les éléments latéraux (30, 32, 33) sont agencés de part et d'autre de l'élément mobile (20) en position rétractée.

4. Becquet selon l'une quelconque des revendications précédentes, dans lequel les élément latéraux (30) sont configurés à se rétracter dans le logement (12) lorsque l'élément mobile (20) est en position déployée.

5. Becquet selon l'une quelconque des revendications précédentes, dans lequel les éléments latéraux (32) sont configurés à se déplacer dans des zones adjacentes à l'ouverture (11) sur le corps principal (10) lorsque l'élément mobile (20) est en position déployée.

6. Becquet selon l'une quelconque des revendications précédentes, dans lequel le corps principal (10) comprend des moyens de guidage (13, 14) des éléments latéraux (30, 32) entre deux positions distinctes lorsque l'élément mobile (20) se déplace entre la position rétractée et la position déployée.

7. Véhicule comprenant un becquet (1) arrière selon l'une quelconque des revendications précédentes.

8. Véhicule selon la revendication précédente comprenant un moyen d'actionnement actif de l'élément aérodynamique (20) permettant de mouvoir l'élément aérodynamique (20) entre la position rétractée et la position déployée.
